# EUROPÄISCHE PATENTSCHRIFT

(11) **EP 4 100 273 B1**
(45) Veröffentlichungstag und Bekanntmachung des Hinweises auf die Patenterteilung: **20.05.2026**
(21) Anmeldenummer: 21701290.5
(22) Anmeldetag: 20.01.2021
(51) Int. Cl.: B60K 35/10, B60K 35/50, B60K 35/60, B60K 35/65, B60K 37/20

(54) **ANORDNUNG EINER HANDBALLENAUFLAGE UND EINES BEDIENELEMENTS FÜR EIN FAHRZEUG**
ARRANGEMENT OF A PALM REST AND AN OPERATING ELEMENT FOR A VEHICLE
AGENCEMENT D'UN REPOSE-PAUME ET D'UN ÉLÉMENT DE FONCTIONNEMENT POUR UN VÉHICULE

(30) Priorität: 04.02.2020 DE 102020000729
(43) Veröffentlichungstag der Anmeldung: 14.12.2022
(73) Patentinhaber: MAN Truck & Bus SE, 80995 München (DE)
(72) Erfinder: OCHS, Thomas, 80995 München (DE)
(74) Vertreter: v. Bezold & Partner Patentanwälte - PartG mbB
(86) Internationale Anmeldenummer: PCT/EP2021/051120
(87) Internationale Veröffentlichungsnummer: WO 2021/156051

(56) Entgegenhaltungen:
- EP-A1- 2 397 928
- DE-B3- 102005 033 028
- US-A1- 2015 169 195
- US-A1- 2017 131 792
- US-B2- 7 497 298

## Beschreibung

Die Erfindung betrifft eine Anordnung einer Handballenauflage und eines Bedienelements für ein Fahrzeug, wobei die Handballenauflage ein Abstützen einer Hand bei der Bedienung des Bedienelements ermöglicht.

Aus der Praxis ist bekannt, dass die Bedienung eines Bedienelementes in einem Fahrzeug oftmals erschwert wird, weil die Bewegungen des Fahrzeugs während der Fahrt, insbesondere kurzfristige Bewegungen, eine präzise Eingabe erschweren.

Aus der Praxis ist ferner bekannt, dass im Nutzfahrzeugbereich durch die beim Fahren ständig vorhandene Relativbewegung zwischen Nutzer, z. B. dem Fahrer auf einem luftgefedertem Schwingsitz, und Bedienelementen ein besonders hoher Bedarf besteht, eine zielgerichtete, präzise Bedienung von Bedienelementen während der Fahrt zu ermöglichen.

Aus der Praxis ist daher bekannt, eine Handballenauflage an dem Bedienelement anzuordnen, die in unmittelbarer Nähe des Bedienelementes die Hand fixiert und eine feinfühlige und exakte Bedienung z. B. eines Dreh-Drückstellers ermöglicht. Das Bedienelement mitsamt der Handballenauflage sollte daher, um während der Fahrt dauerhaft eine bequeme und beschwerdefreie Bedienung ermöglichen zu können, in ergonomisch richtiger Position zum Bediener angebracht sein; in diesem Fall in einem Abstand zum Fahrer, der die Bedienung ohne Vorbeugen des Oberkörpers und ohne Abheben der Schulter von der Sitzrückenfläche ermöglicht.

Die Offenlegungsschrift EP 2 397 928 A1 zeigt eine Armlehnenvorrichtung zur Verwendung mit einer ersten und einer zweiten Steuervorrichtung, die in einer Tandemkonfiguration angeordnet sind. Die Armlehnenvorrichtung umfasst ein Armstützelement, das beweglich an einem Basiselement angebracht ist und das so konfiguriert ist, dass es sich zwischen einer ersten und einer zweiten Position bewegen kann. Das Armstützelement ist so konfiguriert, dass es den Arm eines Benutzers beim Zugriff auf die erste Steuervorrichtung abstützt, wenn es sich in der ersten Position befindet, und den Arm des Benutzers beim Zugriff auf die zweite Steuervorrichtung abstützt, wenn es sich in der zweiten Position befindet.

Die Offenlegungsschrift US 2015/0169195 A1 offenbart ein Mehrfachbedienungssystem und ein Verfahren, das ein Tastenfeld eines Bediensystems eines Fahrzeugs verwendet. Das Mehrfachbedienungssystem umfasst ein Touchpad, das so konfiguriert ist, dass es eine Fingerbewegungsgesteneingabe empfängt und ein Gestensignal erzeugt.

Die Offenlegungsschrift US 2017/0131792 A1 zeigt eine Fernbedienungsvorrichtung, mit einem ersten Eingabebereich, der eine drehbare Scheibe aufweist, die verschiebbar und drehbar gelagert ist, und mit einem zweiten Eingabebereich, der aus einem Touchpanel gebildet ist, das auf einer Außenfläche der drehbaren Scheibe angeordnet ist. Eine Steuereinheit akzeptiert eine Verschiebung der Drehscheibe aus einer vorbestimmten neutralen Position, einen Drehwinkel der Drehscheibe und eine Eingabe auf dem zweiten Eingabebereich als äußere Operationen.

Die Offenlegungsschrift DE 10 2005 033 028 B3 zeigt eine Bedieneinrichtung für Kraftfahrzeuge, die fest mit einem Fahrzeugsitz verbunden ist, mit einem Bedienpanel und einer Befestigungseinrichtung, die das Bedienpanel fest mit einer Armlehne des Fahrzeugsitzes verbindet. Die Befestigungseinrichtung ermöglicht ein Drehen, Schwenken und/oder Verschieben des Bedienpanels. Durch ein Verschwenken der Armlehne in Verbindung mit einem Drehen, Schwenken und/oder Verschieben des Bedienpanels kann das Bedienpanel in eine für eine Bedienung optimale Position sowohl in einem Fahrzustand als auch in einem Ruhezustand, in dem der Fahrer sich auf einer Ruheliege hinter dem Fahrzeugsitz befindet, gebracht werden kann.

Die Offenlegungsschrift US 7,497,298 B2 offenbart ein Steuersystem für eine Arbeitsmaschine mit einem Knickgelenk und einem Arbeitsgerät mit mindestens einer Drehachse, und mit einem ersten Hebel mit einer ersten Längsachse. Ein Torsionswinkel des ersten Hebels um die erste Längsachse ist mit einer Drehgeschwindigkeit der Arbeitsmaschine verbunden. Das Steuersystem weist außerdem einen zweiten Hebel mit einer zweiten Längsachse auf. Ein Torsionswinkel des zweiten Hebels um die zweite Längsachse steht im Zusammenhang mit einer Drehgeschwindigkeit des Arbeitsgeräts um die mindestens eine Drehachse. An dem ersten und dem zweiten Hebel sind mehrere Bedienvorrichtungen angeordnet.

Die Offenlegungsschrift DE 10 2013 222 696 A1 schlägt das Vorsehen einer Handballenauflage vor, die in zwei unterschiedlichen Positionen zu einem Lenkradkranz angeordnet werden kann, um die Bedienung einer berührungsempfindlichen Fläche (Touchpad) trotz Fahrzeugbewegungen während der Fahrt zu erleichtern. Die Handballenauflage kann bei Nichtgebrauch in eine nicht-störende, platzsparende Lage positioniert werden. Nachteilig hieran ist jedoch, dass die vorgeschlagene Lösung in erster Linie für Bedienelemente im Innern eines Lenkradkranzes und insbesondere für den autonomen Fahrbetrieb geeignet ist und sich nicht auf die verbesserte Bedienung anderer Bedienelemente im Fahrzeug übertragen lässt

Es ist daher eine Aufgabe der Erfindung, einen Ansatz bereitzustellen, mit dem Nachteile herkömmlicher Techniken vermieden werden können und der eine präzise Bedienung eines handbetätigten Bedienelements ermöglicht.

Diese Aufgaben werden durch eine Anordnung einer Handballenauflage und eines handbetätigbaren Bedienelements mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem allgemeinen Gesichtspunkt der Erfindung wird eine Anordnung einer Handballenauflage und eines handbetätigbaren Bedienelements für ein Fahrzeug bereitgestellt. Hierbei ist die Handballenauflage dazu ausgebildet, zumindest eine erste Position und eine zweite Position relativ zum Bedienelement einzunehmen. In der ersten Position ist die Handballenauflage in an sich bekannter Weise derart positioniert, dass sie ein Abstützen einer Hand bei der Bedienung des Bedienelements ermöglicht. Die erste Position stellt somit eine Gebrauchsposition der Handballenauflage dar.

Erfindungsgemäß ist die Handballenauflage in der zweiten Position derart positioniert, dass die Handballenauflage das Bedienelement zumindest teilweise überragt und/oder verdeckt. Darunter wird verstanden, dass zumindest ein Teilabschnitt der Handballenauflage das Bedienelement zumindest teilweise überragt und/oder verdeckt.

Dies bietet den besonderen Vorzug, dass die Handballenauflage in einer vorteilhaften Doppelfunktion verwendet werden kann: Einerseits ermöglicht die Handballenauflage, wenn diese in der ersten Position positioniert ist, eine verbesserte Bedienung eines Bedienelementes durch ein Abstützen einer Hand, mit welcher das Bedienelement bedient wird. Andererseits kann die Handballenauflage, wenn sie nicht gebraucht wird, z. B. bei abgestelltem Fahrzeug, in eine Position (hier als zweite Position bezeichnet) gebracht werden, in der die Handballenauflage einen mechanischen Schutz des Bedienelements bietet, indem sie das Bedienelement zumindest teilweise überragt und/oder verdeckt. Die zweite Position stellt somit eine Nicht-Gebrauchsposition der Handballenauflage dar, da die Handballenauflage in dieser Position nicht als Handballenauflage zur Bedienung des Bedienelementes gebraucht wird.

Dies ist insbesondere im Nutzfahrzeugbereich bei Nutzfahrzeugen mit Fahrerkabine vorteilhaft. Bei Stillstand des Fahrzeugs entsteht meistens eine neue Nutzungssituation. Der Fahrer wird aus seinem Sitz aufstehen, um sich z. B. in dem Bereich des Kabineninnenraumes aufzuhalten, der dies am bequemsten ermöglicht: Der Platz zwischen den Sitzen ermöglicht evtl. Stehhöhe, die Liege wird benutzt etc. Beim Übergang in diesen Bereich ist je nach Statur des Nutzers ein gewisses Durchstiegsmaß zwischen Fahrersitz und Instrumententafel erforderlich, um nicht mit den Beinen hängen zu bleiben oder Beschädigungen an Bedienteilen zu verursachen. Ist nun ein Bedienelement z. B. in diesem Durchstiegsbereich angeordnet, wird dieser Durchstieg durch das in ergonomisch richtiger Position angebrachte Bedienelement zwangsläufig in seiner lichten Weite reduziert. Es entsteht Verletzungs- und Beschädigungsgefahr. Die erfindungsgemäße Anordnung aus Bedienelement und Handballenauflage ist somit besonders vorteilhaft für Bedienelemente, die in einem derartigen Durchstiegsbereich angeordnet sind.

Eine Handballenauflage kann einen Auflagebereich aufweisen, der geeignet ist, um als Abstütz- bzw. Auflagefläche für einen Handballen einer Person, die das Bedienelement bedienen soll, dienen zu können. Hierzu kann die Handballenauflage zur Ausbildung des Auflagebereichs eine verwindungssteife Ablage aufweisen, die derart proportioniert ist, dass sie mindestens die Größe und Form hat, dass ein typischer Handballen hierauf abgestützt werden kann.

In einer bevorzugten Ausführungsform der Anordnung weist die Handballenauflage einen länglichen und/oder armförmigen Haltebereich auf, der zum beweglichen Anordnen der Handballenauflage relativ zum Bedienelement ausgebildet ist. Gemäß dieser Ausführungsform weist die Handballenauflage ferner einen Kopfbereich auf, der an einem Endbereich des Haltebereichs angeformt ist, von diesem absteht, vorzugsweise in Richtung des Bedienelements absteht, und an seiner Oberseite eine Handballenauflagefläche ausbildet. Die Ausführungsform ermöglicht eine kompakte, platzsparende Realisierung der Handballenauflage. Ein besonderer Vorzug ist ferner, dass die Handballenauflage in der zweiten Position einen vorher benötigten Raum in Richtung zu einer Bedienperson freigibt, so dass dieser Raum bei Nichtbenutzung des Bedienelements anderweitig genutzt werden kann, z. B. zur Vergrößerung eines Durchstiegsbereichs. Ferner wird die Gefahr einer Beschädigung sowohl der Handballenauflage als auch des Bedienelements reduziert. Der Haltebereich und der Kopfbereich können ein einstückiges Bauteil ausbilden.

Hierbei kann der Kopfbereich in der zweiten Position eine Abdeckung oder eine Teilabdeckung für eine Oberseite des Bedienelements ausbilden.

Der Kopfbereich kann beispielsweise griffförmig, knaufförmig, pilzförmig und/oder als Verdickung an einen Endbereich des Haltebereichs ausgeführt sein. Ferner kann der Kopfbereich im Wesentlichen senkrecht von dem Haltebereich abstehen, vorzugsweise nur in einer Richtung senkrecht von dem Haltebereich abstehen. Diese Varianten sind vorteilhaft, da diese Formen sowohl vorteilhaft für die Realisierung einer Handballenauflagefläche am Kopfbereich sind als auch zur Realisierung einer zumindest teilweisen Überragung und/oder Verdeckung des Bedienelements durch den Kopfbereich in der zweiten Position der Handballenauflage.

Gemäß einer weiteren Ausführungsform ist vorgesehen, dass der Kopfbereich in der zweiten Position das Bedienelement derart überragt, dass bei auf der Handballenauflage abgestützter Hand eine handbetätigte Bedienung des Bedienelements nicht möglich ist oder zumindest behindert wird oder nur unter erheblichen Komforteinbußen möglich ist. Mit anderen Worten wird eine Bedienung des Bedienelements verhindert oder zumindest erschwert, wenn die Handballenauflage in die zweite Position gebracht wird, jedoch kann stattdessen die Handballenauflage in dieser Position einen mechanischen Schutz des Bedienelements ausbilden.

In einer weiteren Ausführungsform weist die Handballenauflage eine Schwenkverbindung auf, um die Handballenauflage relativ beweglich zum Bedienelement anzuordnen und zum Bedienelement verschwenkbar und/oder klappbar auszuführen. Die Schwenkverbindung ermöglicht somit das Einnehmen der zweiten Position ausgehend von der ersten Position hin zum Bedienelement und umgekehrt. Die Ausführungsform ermöglicht eine besonders kompakte, platzsparende Realisierung der Handballenauflage. Ein besonderer Vorzug ist ferner, dass die Handballenauflage in der zweiten Position einen vorher durch die Positionierung in der ersten Position (Gebrauchsposition) benötigten Raum in Richtung zu einer Bedienperson durch das Verschwenken in die zweite Position wieder freigibt, so dass dieser Raum bei Nichtbenutzung des Bedienelements anderweitig genutzt werden kann, z. B. zur Vergrößerung eines Durchstiegsbereichs, wie vorstehend beschrieben wurde.

Beispielsweise kann zur Ausbildung der Schwenkverbindung die Handballenauflage um eine quer zur Längsrichtung des Haltebereichs verlaufende Schwenkachse, die an einem dem Kopfbereich abgewandten Endbereich des Haltebereichs angeordnet ist, verschwenkbar zum und/oder am Bedienelement angeordnet sein. Die Handballenauflage kann hierzu an einem Gehäuse oder einer Halterung des Bedienelements verschwenkbar gehaltert sein. In einem im Fahrzeug verbauten Zustand kann die Anordnung so montiert sein, dass die Schwenkachse eine Horizontalachse ist, die ein "Hochklappen" oder Hochverschwenken der Handballenauflage ermöglicht, um die Handballenauflage ausgehend von der ersten Position in die zweite Position zu bringen. Die Schwenkverbindung kann direkt die Handballenauflage mit dem Bedienelement oder einem Gehäuse oder einer Halterung des Bedienelements verschwenkbar verbinden. Alternativ kann die Schwenkverbindung zwischen Handballenauflage und einem anderen Fahrzeugbauteil, an dem das Bedienteil gehaltert ist oder das benachbart zum Bedienteil angeordnet ist, ausgebildet sein.

Es wird jedoch betont, dass auch andere Ausführungsformen möglich sind, um die Handballenauflage relativ beweglich zum Bedienelement anzuordnen, beispielsweise eine Führungsmechanik, mittels derer die Handballenauflage von der ersten in die zweite Position verfahrbar ist, vorzugsweise linear verfahrbar ist.

Das Bedienelement ist nicht auf eine bestimmte Ausführungsform eingeschränkt. Nachfolgend werden lediglich mögliche und besonders vorteilhafte Ausführungsformen des Bedienelements beschrieben.

In einer weiteren Ausführungsform kann das Bedienelement einen mechanischen Drehsteller umfassen. Alternativ oder zusätzlich kann das Bedienelement eine berührungsempfindliche Eingabe-Oberfläche (sog. Touchpad) umfassen. Alternativ oder zusätzlich kann der Drehsteller als Dreh-Drücksteller ausgebildet sein, d. h., der Drehsteller kann mittels einer Drehbedienung und einer Drückbetätigung bedient werden.

Gemäß einer weiteren bevorzugten Variante kann der mechanische Drehsteller einen drehbaren Außenring aufweisen, der die berührungsempfindliche Eingabe-Oberfläche (sog. Touchpad) umschließt. Gemäß einer weiteren bevorzugten Variante kann der Außenring alternativ oder zusätzlich einen mechanischen Druck- oder Kippschalter ausbilden, der vorzugsweise als monostabiler Tast-, Drück- oder Kippschalter, der nach dem manuellen Auslenken in zumindest eine Richtung wieder in seine Ausgangslage zurückkehrt, ausgeführt ist. Dies bedeutet, dass der monostabile Tast-, Drück- oder Kippschalter somit nach Wegfall der äußeren Betätigungskraft immer selbsttätig in seine Ausgangslage zurückgeht. Anders ausgedrückt weist der monostabile Tast-, Drück- oder Kippschalter im Wesentlichen nur eine stabile Tast-, Drück- oder Kippstellung auf und kehrt nach einem Schalten in eine vorwärts oder rückwärts oder seitlich gerichtete Richtung immer wieder in diese monostabile Stellung zurück.

Vorzugsweise vereint das Bedienelement sowohl den Drehsteller, die berührungsempfindliche Eingabe-Oberfläche und den mechanischen Druck- oder Kippschalter in einem multifunktionalem Bedienelement. Derartige Bedienelemente sind im Fahrzeug besonders vorteilhaft zur Bedienung eines Infotainment-Systems des Fahrzeugs. Entsprechend kann es sich bei dem Bedienelement um ein Bedienelement für ein Infotainment-System des Fahrzeugs handeln.

In einer weiteren Ausführungsform kann die Anordnung einen Überlastschutz zum Schutz der Handballenauflage und/oder des Bedienelements vor zu starker mechanischer Belastung aufweisen. Beispielsweise kann der Überlastschutz optional als Scharnier (Schutzscharnier) oder Gelenk (Schutzgelenk) ausgeführt sein, das bei einer vorbestimmten mechanischen Überlastung, die eine Bedienperson auf die Anordnung ausübt, ausrastet oder überschnappt. Beispielsweise kann die Schwenkverbindung der Handballenauflage als das Schutzscharnier oder Schutzgelenk ausgeführt sein, das eine Federeinrichtung bzw. Federmechanismus zum Schutz vor mechanischer Überlastung aufweist, wobei die Federeinrichtung bzw. der Federmechanismus, die Handballenauflage gegen eine Anschlagkante drückt, wenn sich die Handballenauflage in der ersten und/oder zweiten Position befindet. Die Federeinrichtung kann dabei so ausgelegt sein, dass wenn die Last auf die Handballenauflage einen üblichen Bereich übersteigt, z. B. einen vorbestimmten Schwellenwert übersteigt, die Anschlagkante ausweichen kann, beispielweise in dem die Handballenauflage eine dritte Position einnimmt, um Überlastkräfte abzuleiten.

Gemäß einem weiteren Gesichtspunkt betrifft die Erfindung ferner ein Fahrzeug mit einer Anordnung umfassend die Handballenauflage und das Bedienelement, wie in diesem Dokument beschrieben. Das Fahrzeug kann ein Kraftfahrzeug sein, vorzugsweise ein Nutzfahrzeug, wie beispielsweise ein Lastkraftwagen oder ein Omnibus.

In einer Ausführungsform ist das Bedienelement ein Bedienelement zur Ansteuerung eines Fahrzeug-Infotainment-Systems. Hierbei kann das Bedienelement ein Bedienelement sein, mittels dessen lediglich ein Infotainment-System des Fahrzeugs ansteuerbar ist.

In einer weiteren Ausführungsform können das Bedienelement und die Handballenauflage im Bereich oder angrenzend zu einer Innerraumkomponente des Fahrzeugs derart angeordnet sein, dass die Handballenauflage sich in der zweiten Position näher an der Innenraumkomponente befindet als in der ersten Position. Die Innenraumkomponente kann eine Instrumententafel sein. Bei dieser Variante befindet sich die Handballenauflage in der zweiten Position somit näher an der Instrumententafel und gibt in dieser Stellung zuvor benötigten Raum zur anderweitigen Nutzung frei.

Gemäß einer besonders bevorzugten Ausführungsform ist die Anordnung, umfassend das Bedienelement und die Handballenauflage, zwischen einer Instrumententafel und einem Fahrersitz des Fahrzeugs angeordnet, wobei ein Freiraum zwischen der Anordnung und dem Fahrersitz größer ist, wenn sich die Handballenauflage in der zweiten Position befindet, als wenn sich die Handballenauflage in der ersten Position befindet.

Gemäß einer vorteilhaften Weiterbildung dieser Ausführungsform ist das Fahrzeug ein Kraftfahrzeug, vorzugsweise ein Nutzfahrzeug, z. B. ein Lastkraftwagen, umfassend ein Fahrerhaus, in dem hinter einem Fahrersitz ein Aufenthaltsbereich für den Fahrer angeordnet ist, der über einen Durchstieg zum Aufenthaltsbereich, der sich an den Fahrersitz anschließt, erreichbar ist. Derartige Aufenthaltsbereiche von Fahrerhäusern sind an sich aus dem Stand der Technik bekannt. Gemäß der vorteilhaften Weiterbildung ist die Anordnung, umfassend das Bedienelement und die Handballenauflage, zwischen einer Instrumententafel und einem Fahrersitz des Fahrzeugs in dem Durchstiegsbereich derart angeordnet, dass die Handballenauflage sich in der zweiten Position näher an der Instrumententafel befindet als in der ersten Position. Ferner ist eine Breite des Durchstiegsbereichs größer, wenn sich die Handballenauflage in der zweiten Position befindet.

Wie vorstehend bereits ausgeführt, ist diese Ausführungsvariante besonders vorteilhaft, um bei Stillstand des Fahrzeugs eine unbeabsichtigte Beschädigung des Bedienelements und/oder der Handballenauflage zu vermeiden, wenn z. B. bei Stillstand des Fahrzeugs der Fahrer aus seinem Sitz aufsteht, um sich in dem Bereich des Kabineninnenraumes durch den Durchstiegsbereich zu bewegen. Hierzu ist im Stillstand die Handballenauflage in die zweite Position zu bringen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1A: eine Seitenansicht einer Anordnung aus Handballenauflage und Bedienelement in der ersten Position gemäß einer Ausführungsform der Erfindung;
- Figur 1B: eine Seitenansicht einer Anordnung aus Handballenauflage und Bedienelement in der zweiten Position gemäß einer Ausführungsform der Erfindung;
- Figur 2A: eine perspektivische Ansicht einer Anordnung aus Handballenauflage und Bedienelement in der ersten Position gemäß einer Ausführungsform der Erfindung;
- Figur 2B: eine perspektivische Ansicht einer Anordnung aus Handballenauflage und Bedienelement in der zweiten Position gemäß einer Ausführungsform der Erfindung;
- Figur 3A: eine Seitenansicht einer Anordnung aus Handballenauflage und Bedienelement in der ersten Position mit einer aufgelegten Hand gemäß einer Ausführungsform der Erfindung;
- Figur 3B: eine Seitenansicht einer Anordnung aus Handballenauflage und Bedienelement in der zweiten Position mit einer aufgelegten Hand gemäß einer Ausführungsform der Erfindung;
- Figur 4A: eine Draufsicht eines Innenraums eines Fahrzeugs mit einer Anordnung aus Handballenauflage und Bedienelement in der ersten Position gemäß einer Ausführungsform der Erfindung;
- Figur 4B: eine Draufsicht eines Innenraums eines Fahrzeugs mit einer Anordnung aus Handballenauflage und Bedienelement in der zweiten Position gemäß einer Ausführungsform der Erfindung; und
- Figur 5: eine Seitenansicht einer Anordnung aus Handballenauflage und Bedienelement in einer dritten Position zur Illustration der Funktion eines Überlastschutzes gemäß einer weiteren Ausführungsform der Erfindung.

Gleiche oder äquivalente Elemente sind in allen Figuren mit denselben Bezugszeichen bezeichnet und zum Teil nicht gesondert beschrieben.

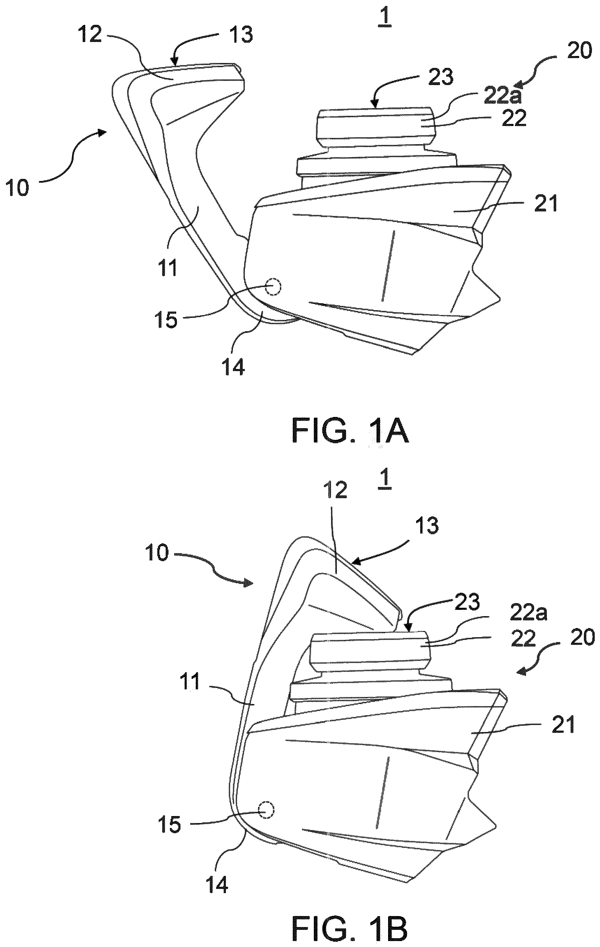

Figur 1A zeigt eine schematische Seitenansicht einer Anordnung 1 aus einer Handballenauflage 10 und einem Bedienelement 20 gemäß einer Ausführungsform der Erfindung. Bei dem Bedienelement 20 handelt es sich um ein handbetätigbares Bedienelement 20 für ein Infotainment-System eines Kraftfahrzeugs. Ein Infotainment-System im Sinne der Erfindung ist insbesondere ein Informations-, Entertainment- und Kommunikationssystem oder ein Informations- und Entertainmentsystem des Kraftfahrzeugs. Über das Bedienelement 10 kann das Infotainment-System bedient werden, z. B. zur Bedienung des Navigationssystems, des Entertainmentsystems und/oder zur Auswahl und zum Informationsabruf von Fahrzeuginformationen.

Das Bedienelement 20 umfasst dabei gemäß der beispielhaft gezeigten Ausführungsform einen mechanischen Drehsteller 22, der für Bedieneingaben einen drehbaren Außenring 22a aufweist, und eine berührungsempfindliche Eingabe-Oberfläche 23, die sich auf der Oberseite des Bedienelements 20 befindet und vom drehbaren Außenring 22a umschlossen wird. Die berührungsempfindliche Eingabe-Oberfläche 23 bildet ein sog. Touchpad aus, so dass eine Bedienperson mit ihren Fingern Eingabebefehle über die Eingabe-Oberfläche 23 eingeben kann. Der Außenring 22a bildet ferner einen mechanischen Druckschalter aus, der als monostabiler Kippschalter ausgeführt ist, der in vier horizontale Richtungen auslenkbar ist und der nach dem manuellen Auslenken wieder in seine Ausgangslage zurückkehrt. Das Bedienelement kann somit nicht nur durch Drehen des Außenrings 22a und über die berührungsempfindliche Eingabe-Oberfläche 23 bedient werden, sondern zusätzlich auch durch eine horizontale Auslenkung des Außenrings 22a.

Das Bedienelement 20 ist in einer Halterung 21 gehaltert, die z. B. an einer Instrumententafel oder an einem Bereich einer Mittelkonsole angeordnet sein kann.

Die Anordnung umfasst ferner eine Handballenauflage 10. Die Handballenauflage 10 dient dazu, um die Bedienung des Bedienelementes 10 zu erleichtern, die ohne Handballenauflage 10 dadurch erschwert würde, dass die Bewegungen des Fahrzeugs während der Fahrt, insbesondere kurzfristige Bewegungen, eine präzise Eingabe erschweren. Im Nutzfahrzeugbereich ist dies von noch größerer Bedeutung, da der Fahrer in der Regel auf einem luftgefederten Schwingsitz sitzt und dadurch beim Fahren ständig leicht federnde Bewegungen ausführt, die zu ständigen Relativbewegungen zwischen Fahrer und einem im Fahrzeug fest angeordneten Bedienelement führt.

Durch Auflegen eines Handballens 3 auf der Handballenauflage wird eine zielgerichtete, präzise Bedienung des Bedienelementes 20 erleichtert, denn die Hand 2 wird auf der Handballenauflage 10 fixiert, so dass eine feinfühlige und exakte Bedienung z. B. des Dreh-Drückstellers 21 oder des Touchpads 23 ermöglicht wird.

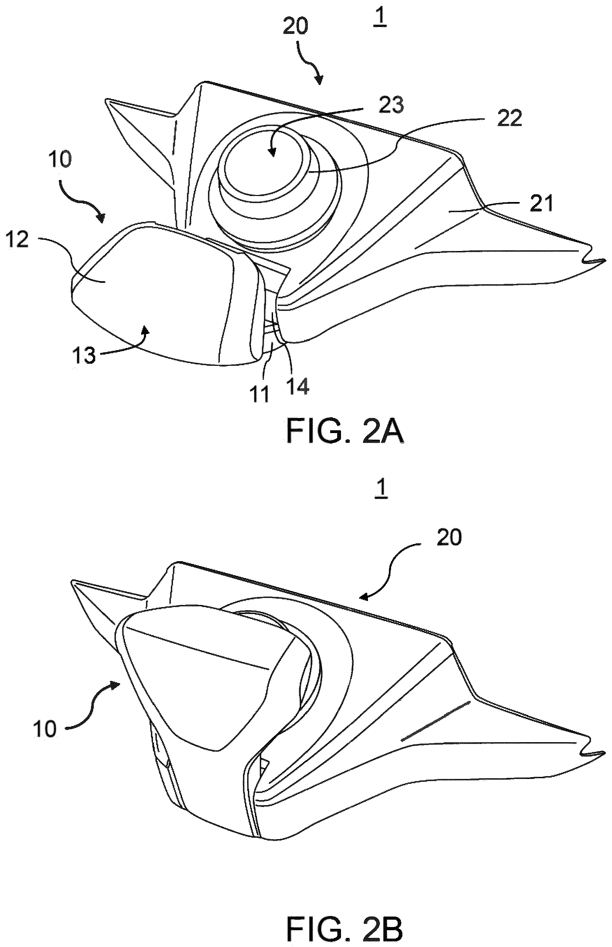

Die Handballenauflage 10 ist über eine Schwenkverbindung 15 verschwenkbar zum Bedienelement 20 angeordnet und kann durch Verschwenken in eine erste und eine zweite Position relativ zum Bedienelement 20 gebracht werden. In der ersten Position ist die Handballenauflage 10 derart positioniert, dass sie ein Abstützen einer Hand 2 bei der Bedienung des Bedienelements 20 ermöglicht. Diese erste Position ist in den Figuren 1A, 2A und 3A dargestellt.

In der zweiten Position ist die Handballenauflage 10 derart positioniert, dass die Handballenauflage 10 das Bedienelement 20 zumindest teilweise überragt und/oder verdeckt. Diese erste Position ist in den Figuren 1B, 2B und 3B dargestellt.

Die Handballenauflage 10 weist hierzu einen länglichen und armförmigen Haltebereich 11 auf, der zum beweglichen Anordnen der Handballenauflage 10 relativ zum Bedienelement 20 ausgebildet ist.

Die Schwenkverbindung 15 ist durch eine quer zur Längsrichtung des Haltebereichs verlaufende Schwenkachse 15 gebildet, die an einem unteren Endbereich 14 des Haltebereichs 11 bzw. des Schwenkarms 11 angeordnet ist, um die Handballenauflage verschwenkbar am Bedienelement 20, hier der Halterung 21 des Bedienelements 20, anzuordnen.

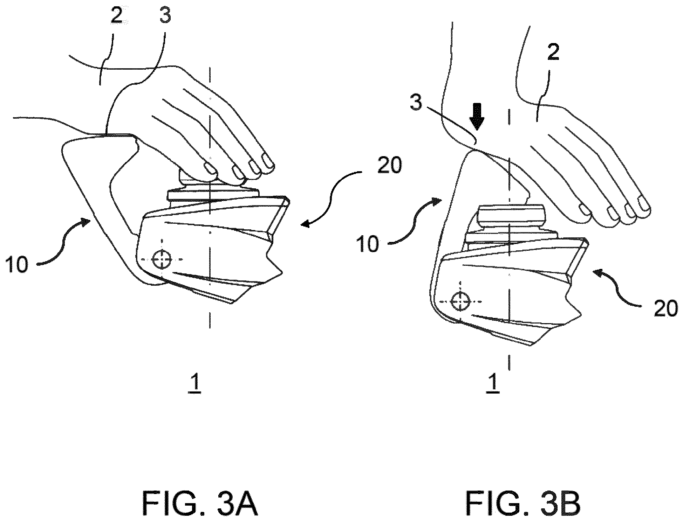

Die Handballenauflage 10 umfasst ferner einen Kopfbereich 12, der an einem Endbereich des Haltebereichs 11 angeformt ist und von diesem in Richtung des Bedienelements 20 absteht. Der Kopfbereich 12 bildet an seiner Oberseite eine Handballenauflagefläche 13 zur Aufnahme des Handballens 3 aus. Die Handballenauflagefläche 13 muss groß genug sein, um als Abstütz- bzw. Auflagefläche für einen Handballen 3 einer erwachsenen Person dienen zu können (vgl. Fig. 3A).

Die Auflagefläche 13 ist ferner plan oder leicht gekrümmt ausgeführt. Wie in Fig. 1A erkennbar ist, ist der Kopfbereich 12 als Verdickung an einen Endbereich des Haltebereichs 11 an diesen angeformt. Der Kopfbereich kann griffförmig, knaufförmig oder pilzförmig ausgeführt sein.

Im Fahrzeugstillstand kann durch manuelles Verschwenken der Handballenauflage 10 diese in die zweite Position gebracht werden, wie z. B. in Fig. 1B dargestellt. Wie bereits erwähnt, ist die Handballenauflage 10 in der zweiten Position derart positioniert, dass die Handballenauflage das Bedienelement 20 zumindest teilweise überragt und/oder verdeckt. Hier überragt der Kopfbereich 12 der Handballenauflage das Bedienelement 20 zumindest teilweise derart, dass bei auf der Handballenauflage 10 abgestützter Hand 2 eine handbetätigte Bedienung des Bedienelements 20 nicht möglich ist oder zumindest behindert wird oder nur unter erheblichen Komforteinbußen möglich ist. Dies ist in Fig. 3B illustriert.

Die zweite Position bietet jedoch den Vorteil, dass durch die Handballenauflage 10 einerseits bisher benötigter Raum im Fahrzeug freigegeben wird und gleichzeitig ein mechanischer Schutz für das Bedienelement 20 durch die Handballenauflage ermöglicht wird, insbesondere für die empfindliche Oberseite (Touchpad, Drehsteller etc.) des Bedienelements, um dieses vor unbeabsichtigter Beschädigung besser zu schützen.

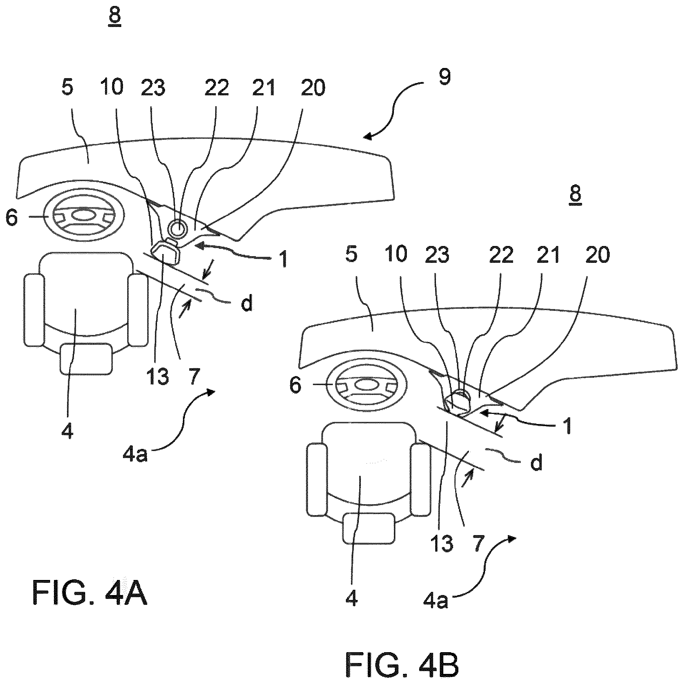

Dies ist in den Figuren 4A und 4B nochmals anhand eines weiteren Ausführungsbeispiels illustriert. Die Figuren 4A und 4B zeigen als Beispiel für ein Fahrzeug 8 ein Nutzfahrzeug, insbesondere einen Lastkraftwagen, wobei hiervon lediglich eine schematische Draufsicht eines Innenraums eines Fahrerhauses bzw. einer Fahrerkabine 9 gezeigt ist. Die anderen Teile des Fahrzeugs können in an sich bekannter Weise ausgeführt sein und sind nicht dargestellt.

Wiederum erkennbar ist die Anordnung 1 der Handballenauflage 10 und des handbetätigbaren Bedienelements 20 zur Bedienung eines Infotainment-Systems des Fahrzeugs, wobei die Handballenauflage 10 wiederum dazu ausgebildet ist, eine erste und eine zweite Position relativ zum Bedienelement 20, wie vorstehend beschrieben, einnehmen zu können.

Die Anordnung 1 aus Bedienelement 20 und Handballenauflage 10 ist, um während der Fahrt dauerhaft bequeme und beschwerdefreie Bedienung ermöglichen zu können, in ergonomisch geeigneter Position zum Bediener angebracht; in diesem Fall in einem Abstand zum Fahrer, der die Bedienung ohne Vorbeugen des Oberkörpers und ohne Abheben der Schulter von der Sitzrückenfläche ermöglicht. Hierzu ist die Anordnung 1 in Armreichweite vom Fahrersitz 4 in einem Mittelbereich der Instrumententafel 5 angeordnet. Unter der Instrumententafel 5 wird der gesamte sich entlang der Frontwindschutzscheibe erstreckende Bereich verstanden, der das Kombi-Instrument des Fahrzeugs, den/die Bildschirm/e des Infotainment-Systems und den an die Windschutzscheibe angrenzenden Bereich auf der Beifahrerseite umfasst.

Hinter dem Fahrersitz 4 befindet sich in der Fahrerkabine 9 ein Aufenthaltsbereich 4a für den Fahrer, z. B. mit einer Schlafgelegenheit. Der Aufenthaltsbereich 4a ist über einen Durchstieg 7 ausgehend vom Fahrersitz 4 erreichbar. Wie in Fig. 4A erkennbar ist, ist die Anordnung 1 angrenzend oder in einem Randbereich dieses Durchstiegs 7 im Bereich der Instrumententafel 5 angeordnet.

Hierbei ist die Anordnung 1, umfassend das Bedienelement 20 und die Handballenauflage 10, derart zwischen der Instrumententafel 5 und dem Fahrersitz 4 in dem Durchstiegsbereich 7 angeordnet, dass die Handballenauflage 10 sich in der zweiten Position näher an der Instrumententafel 5 befindet als in der ersten Position. Zum Einnehmen der zweiten Position wird die Handballenauflage hin zum Bedienelement 20 in Richtung Instrumententafel 5 hochgeklappt. Dadurch vergrößert sich in der zweiten Position eine Breite d des Durchstiegsbereichs 7, wenn sich die Handballenauflage 10 in der zweiten Position befindet im Vergleich zu einer Situation, wenn sich die Handballenauflage 10 in der ersten Position befindet.

Zusammenfassend wird somit die Durchstiegs-Breite d zwischen Fahrersitz 4 und Instrumententafel 5 vergrößert, um dem Fahrer den Durchstieg in den Aufenthaltsbereich 4a der Kabine zu erleichtern und die Gefahr des Hängenbleibens zu reduzieren. Das empfindliche, mit Sensorik und beweglichen Teilen ausgestattete Bedienelement 20 wird gleichzeitig von der Handballenauflage 10 umhüllt oder zumindest zum Teil abgedeckt und so vor mechanischer Beschädigung geschützt. Hierbei spielt nicht nur der Schutz beim Vorbeistreifen eine Rolle, sondern insbesondere die stabile Abdeckung von oben, für den nicht unwahrscheinlichen Fall, dass der Fahrer sich beim Aufrichten aus dem Sitz an der Konsole des Bedienelements abstützt.

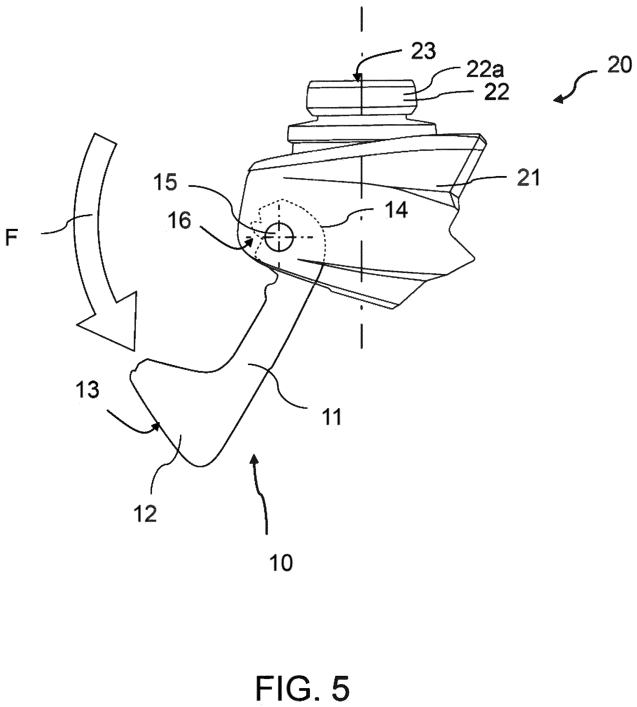

Figur 5 zeigt eine Seitenansicht einer Anordnung aus Handballenauflage und Bedienelement in einer dritten Position zur Illustration der Funktion eines Überlastschutzes gemäß einer weiteren Ausführungsform der Erfindung. Gemäß dieser weiteren Ausführungsform weist die Anordnung aus Handballenauflage 10 und Bedienelement 20 einen Überlastschutz 16 zum Schutz der Handballenauflage und/oder des Bedienelements vor zu starker mechanischer Belastung auf.

Wenn die Handballenauflage 10 in ihre Einsatzposition verschwenkt ist, d. h. die Handballenauflage befindet sich in der ersten Position gemäß Figur 1A, wird die Endstellung der Drehbewegung dabei durch eine Anschlagkante (nicht dargestellt) unterhalb der Drehachse 15 definiert, an die sich das Bauteil 11, insbesondere der Endbereich 14 des Schwenkarms 11, anlegt und sich daran abstützt. Mittels eines starken Federmechanismus (nicht gezeigt) kann diese Anschlagkante ausweichen, wenn die Last den in der Benutzung üblichen Bereich verlässt und so hoch wird, dass Teile der Baugruppe sonst brechen würden. Mit anderen Worten ist der Federmechanismus so ausgelegt, dass sich das Bauteil von der Anschlagkante weg nach unten verschwenken kann, wenn die von oben wirkende Kraft , in Fig. 5 schematisch illustriert durch den Pfeil F, einen vorbestimmten Schwellenwert überschreitet. In diesem Fall führt die Handballenauflage 10 die in Fig. 5 gezeigte Drehbewegung nach unten um die Halterung 21 und Bedienelement 20 herum durch, um die Kraft F nach unten abzuleiten. Die Handballenauflage 10 kann bei einer zu hohen Last somit nach unten wegschwenken in eine dritte Ausweichposition, wie dies in Fig. 5 dargestellt ist.

Zur Realisierung dieses Überlastschutzes 16 kann dieser somit die vorstehend beschriebene Anschlagkante sowie den Federmechanismus im Bereich der Schwenkachse 15 aufweisen, um auf diese Weise ein Schutzgelenk oder Schutzscharnier auszubilden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Anordnung
- 2: Hand
- 3: Handballen
- 4: Fahrersitz
- 4a: Aufenthaltsbereich
- 5: Instrumententafel
- 6: Lenkrad
- 7: Freiraum, z. B. Durchstieg
- 8: Fahrzeug
- 9: Fahrerhaus
- 10: Handballenauflage
- 11: Haltebereich
- 12: Kopfbereich
- 13: Handballenauflagefläche
- 14: Endbereich
- 15: Schwenkverbindung
- 16: Überlastschutz
- 20: Bedienelement
- 21: Halterung
- 22: Drehsteller
- 22a: Außenring
- 23: Berührungsempfindliche Oberfläche

## Patentansprüche

1. Fahrzeug (8) umfassend eine Anordnung (1) einer Handballenauflage (10) und eines handbetätigbaren Bedienelements (20) für ein Fahrzeug, wobei die Handballenauflage (10) dazu ausgebildet ist, eine erste und eine zweite Position relativ zum Bedienelement (20) einzunehmen, wobei die Handballenauflage (10) in der ersten Position derart positioniert ist, dass sie ein Abstützen einer Hand (2) bei der Bedienung des Bedienelements (20) ermöglicht, und
die Handballenauflage (10) in der zweiten Position derart positioniert ist, dass die Handballenauflage (10) das Bedienelement (20) zumindest teilweise überragt und/oder verdeckt, **wobei**
das Fahrzeug (8) ein Nutzfahrzeug ist, und
das Fahrzeug (8) ein Fahrerhaus (9) umfasst, in dem hinter einem Fahrersitz (4) ein Aufenthaltsbereich (4a) für den Fahrer angeordnet ist, der über einen Durchstieg (7) zum Aufenthaltsbereich, der sich an den Fahrersitz (4) anschließt, erreichbar ist, wobei die Anordnung (1), umfassend das Bedienelement (20) und die Handballenauflage (10), zwischen einer Instrumententafel (5) und einem Fahrersitz (4) des Fahrzeugs (8) in dem Durchstiegsbereich (7) derart angeordnet ist, dass die Handballenauflage (10) sich in der zweiten Position näher an der Instrumententafel (5) befindet als in der ersten Position und eine Breite (d) des Durchstiegsbereichs (7) größer ist, wenn sich die Handballenauflage (10) in der zweiten Position befindet, als wenn sich die Handballenauflage (10) in der ersten Position befindet.

2. Fahrzeug (8) nach Anspruch 1, wobei die Handballenauflage (10) aufweist:
a) einen länglichen und/oder armförmigen Haltebereich (11), der zum beweglichen Anordnen der Handballenauflage (10) relativ zum Bedienelement (20) ausgebildet ist; und
b) einen Kopfbereich (12), der an einem Endbereich des Haltebereichs (11) angeformt ist, von diesem absteht, vorzugsweise in Richtung des Bedienelements (20) absteht, und an seiner Oberseite eine Handballenauflagefläche (13) ausbildet.

3. Fahrzeug (8) nach Anspruch 2, wobei der Kopfbereich (12)
a) griffförmig, knaufförmig, pilzförmig und/oder als Verdickung an einem Endbereich des Haltebereichs (11) ausgeführt ist; und/oder
b) im Wesentlichen senkrecht von dem Haltebereich (11) absteht.

4. Fahrzeug (8) nach Anspruch 2 oder 3, wobei in der zweiten Position der Kopfbereich (12) das Bedienelement (20) derart überragt, dass bei einer auf der Handballenauflage (10) abgestützten Hand (2) eine handbetätigte Bedienung des Bedienelements (20) nicht möglich ist, oder zumindest behindert oder nur unter erheblichen Komforteinbußen möglich ist.

5. Fahrzeug (8) nach einem der vorhergehenden Ansprüche, wobei die Handballenauflage (10) eine Schwenkverbindung (15) aufweist, um die Handballenauflage (10) relativ beweglich zum Bedienelement (20) anzuordnen.

6. Fahrzeug (8) nach Anspruch 5, wobei zur Ausbildung der Schwenkverbindung (15) die Handballenauflage um eine quer zur Längsrichtung des Haltebereichs verlaufende Schwenkachse (15), die an einem dem Kopfbereich abgewandten Endbereich (14) des Haltebereichs (11) angeordnet ist, verschwenkbar am Bedienelement (20), vorzugsweise an einem Gehäuse oder einer Halterung (21) des Bedienelements (20), gehaltert ist.

7. Fahrzeug (8) nach einem der vorhergehenden Ansprüche, wobei das Bedienelement (20) einen mechanischen Drehsteller (22) und eine berührungsempfindliche Eingabe-Oberfläche (23) umfasst.

8. Fahrzeug (8) nach Anspruch 7, wobei der mechanische Drehsteller (22) einen drehbaren Außenring (22a) aufweist, der die berührungsempfindliche Eingabe-Oberfläche (23) umschließt.

9. Fahrzeug (8) nach Anspruch 8, wobei der Außenring (22a) ferner einen mechanischen Tast-, Druck- oder Kippschalter ausbildet, der vorzugsweise als monostabiler Tast- oder Kippschalter, der nach dem manuellen Auslenken in zumindest eine Richtung wieder in seine Ausgangslage zurückkehrt, ausgeführt ist.

10. Fahrzeug (8) nach einem der vorhergehenden Ansprüche, wobei die Anordnung (1) einen Überlastschutz (16) zum Schutz der Handballenauflage (10) und/oder des Bedienelements (20) vor zu starker mechanischer Belastung aufweist, wobei der Überlastschutz optional als Schutzscharnier oder Schutzgelenk ausgeführt ist, das bei einer vorbestimmten mechanischen Überlastung ausrastet oder überschnappt.

11. Fahrzeug (8) nach Anspruch 10,
a) wobei das Bedienelement (20) eine Bedienelement zur Ansteuerung eines Fahrzeug-Infotainment-Systems ist; und/oder
b) wobei mittels des Bedienelements (20) lediglich ein Infotainment-System des Fahrzeugs (8) ansteuerbar ist.

12. Fahrzeug (8) nach einem der Ansprüche 10 oder 11, wobei das Bedienelement (20) und die Handballenauflage (10) im Bereich oder angrenzend zu einer Innenraumkomponente des Fahrzeugs, vorzugsweise einer Instrumententafel (5), derart angeordnet sind, dass die Handballenauflage (10) sich in der zweiten Position näher an der Innenraumkomponente befindet als in der ersten Position.

13. Fahrzeug (8) nach einem der Ansprüche 10 bis 12, wobei die Anordnung (1), umfassend das Bedienelement (10) und die Handballenauflage (20), zwischen einer Instrumententafel (5) und einem Fahrersitz (4) des Fahrzeugs (8) angeordnet ist, wobei ein Freiraum (7) zwischen der Anordnung (1) und dem Fahrersitz (4) größer ist, wenn sich die Handballenauflage (10) in der zweiten Position befindet, als wenn sich die Handballenauflage (10) in der ersten Position befindet.

14. Fahrzeug (8) nach einem der Ansprüche 10 bis 13, wobei das Fahrzeug (8) ein Lastkraftwagen oder ein Omnibus ist.

## Claims

1. A vehicle (8) comprising an arrangement (1) of a palm rest (10) and a hand-actuatable control element (20) for a vehicle,
wherein the palm rest (10) is configured to assume a first and a second position relative to the control element (20),
wherein the palm rest (10) in the first position is positioned in such a manner that it allows a hand (2) to be supported while operating the control element (20), and
wherein the palm rest (10) in the second position is positioned in such a manner that the palm rest (10) at least partially projects over and/or covers the control element (20),
wherein the vehicle (8) is a commercial vehicle, and
wherein the vehicle (8) comprises a cab (9) in which, behind a driver's seat (4), a living area (4a) for the driver is arranged, which is accessible via a passage area (7) to the living area adjoining the driver's seat (4),
wherein the arrangement (1), comprising the control element (20) and the palm rest (10), is arranged between an instrument panel (5) and the driver's seat (4) of the vehicle (8) in the passage area (7) in such a manner that the palm rest (10) in the second position is located closer to the instrument panel (5) than in the first position and a width (d) of the passage area (7) is greater when the palm rest (10) is in the second position than when the palm rest (10) is in the first position.

2. The vehicle (8) according to claim 1, wherein the palm rest (10) comprises:
a) an elongated and/or arm-shaped holding section (11), which is configured for movably arranging the palm rest (10) relative to the control element (20); and
b) a head section (12), which is formed on an end section of the holding section (11), projects therefrom, preferably projects in the direction of the control element (20), and forms on its upper side a palm rest surface (13).

3. The vehicle (8) according to claim 2, wherein the head section (12) a) is designed in the form of a grip, knob, mushroom shape and/or as a thickening at an end section of the holding section (11); and/or b) projects substantially perpendicularly from the holding section (11).

4. The vehicle (8) according to claim 2 or 3, wherein in the second position the head section (12) projects over the control element (20) in such a manner that, with a hand (2) supported on the palm rest (10), hand-actuated operation of the control element (20) is not possible, or at least is hindered or only possible with significant loss of comfort.

5. The vehicle (8) according to any of the preceding claims, wherein the palm rest (10) comprises a pivot connection (15) for arranging the palm rest (10) movably relative to the control element (20).

6. The vehicle (8) according to claim 5, wherein, for forming the pivot connection (15), the palm rest is pivotably mounted on the control element (20), preferably on a housing or a holder (21) of the control element (20), about a pivot axis (15) extending transversely to the longitudinal direction of the holding section and arranged at an end section (14) of the holding section (11) facing away from the head section.

7. The vehicle (8) according to any of the preceding claims, wherein the control element (20) comprises a mechanical rotary control (22) and a touch-sensitive input surface (23).

8. The vehicle (8) according to claim 7, wherein the mechanical rotary control (22) comprises a rotatable outer ring (22a) which surrounds the touch-sensitive input surface (23).

9. The vehicle (8) according to claim 8, wherein the outer ring (22a) furthermore forms a mechanical push-button, pressure or toggle switch, which is preferably designed as a monostable push-button or toggle switch that, after manual deflection in at least one direction, returns to its initial position.

10. The vehicle (8) according to any of the preceding claims, wherein the arrangement (1) comprises an overload protection (16) for protecting the palm rest (10) and/or the control element (20) against excessive mechanical load, wherein the overload protection is optionally designed as a protective hinge or protective joint which disengages or snaps over when a predetermined mechanical overload occurs.

11. The vehicle (8) according to claim 10,
a) wherein the control element (20) is a control element for actuating a vehicle infotainment system; and/or
b) wherein only an infotainment system of the vehicle (8) can be actuated by means of the control element (20).

12. The vehicle (8) according to claim 10 or 11, wherein the control element (20) and the palm rest (10) are arranged in the region of or adjacent to an interior component of the vehicle, preferably an instrument panel (5), in such a manner that the palm rest (10) in the second position is located closer to the interior component than in the first position.

13. The vehicle (8) according to any of claims 10 to 12, wherein the arrangement (1), comprising the control element (10) and the palm rest (20), is arranged between an instrument panel (5) and a driver's seat (4) of the vehicle (8), wherein a free space (7) between the arrangement (1) and the driver's seat (4) is greater when the palm rest (10) is in the second position than when the palm rest (10) is in the first position.

14. The vehicle (8) according to any of claims 10 to 13, wherein the vehicle (8) is a truck or a bus.

## Revendications

1. Véhicule (8) comprenant un agencement (1) d'un appui de paume (10) et d'un élément de commande actionnable à la main (20) pour un véhicule, l'appui de paume (10) étant configuré pour adopter une première et une deuxième position par rapport à l'élément de commande (20), l'appui de paume (10) étant positionné, dans la première position, de telle sorte qu'il permet un appui d'une main (2) lors de la commande de l'élément de commande (20), et
l'appui de paume (10) étant positionné, dans la deuxième position, de telle sorte que l'appui de paume (10) surplombe et/ou recouvre au moins partiellement l'élément de commande (20),
le véhicule (8) étant un véhicule utilitaire, et
le véhicule (8) comprenant une cabine de conducteur (9), dans laquelle, derrière un siège de conducteur (4), une zone de séjour (4a) pour le conducteur est disposée, laquelle est accessible par un passage (7) vers la zone de séjour, qui est attenant au siège de conducteur (4), l'agencement (1), comprenant l'élément de commande (20) et l'appui de paume (10), étant disposé entre un tableau de bord (5) et un siège de conducteur (4) du véhicule (8) dans la zone de passage (7) de telle sorte que l'appui de paume (10) se trouve, dans la deuxième position, plus près du tableau de bord (5) que dans la première position et qu'une largeur (d) de la zone de passage (7) est plus grande lorsque l'appui de paume (10) se trouve dans la deuxième position que lorsque l'appui de paume (10) se trouve dans la première position.

2. Véhicule (8) selon la revendication 1, l'appui de paume (10) comprenant :
a) une zone de support (11) allongée et/ou en forme de bras, qui est configurée pour disposer l'appui de paume (10) de manière mobile par rapport à l'élément de commande (20) ; et
b) une zone de tête (12), qui est formée au niveau d'une zone d'extrémité de la zone de support (11), qui s'en écarte, de préférence s'en écarte en direction de l'élément de commande (20), et qui forme, sur son côté supérieur, une surface d'appui de paume (13).

3. Véhicule (8) selon la revendication 2, la zone de tête (12)
a) est réalisée sous forme de poignée, sous forme de bouton, sous forme de champignon et/ou sous forme d'un épaississement au niveau d'une zone d'extrémité de la zone de support (11) ; et/ou
B) fait saillie sensiblement perpendiculairement à partir de la zone de support (11).

4. Véhicule (8) selon la revendication 2 ou 3, dans lequel, dans la deuxième position, la zone de tête (12) surplombe l'élément de commande (20) de telle sorte que, lorsque la main (2) est appuyée sur l'appui de paume (10), une commande manuelle de l'élément de commande (20) n'est pas possible, ou est au moins entravée ou seulement possible avec des pertes de confort considérables.

5. Véhicule (8) selon l'une quelconque des revendications précédentes, dans lequel l'appui de paume (10) présente une liaison pivotante (15) afin de disposer l'appui de paume (10) de manière mobile par rapport à l'élément de commande (20).

6. Véhicule (8) selon la revendication 5, dans lequel, pour la formation de la liaison pivotante (15), l'appui de paume est monté de manière pivotante sur l'élément de commande (20), de préférence sur un boîtier ou un support (21) de l'élément de commande (20), autour d'un axe de pivotement (15) s'étendant transversalement à la direction longitudinale de la zone de support et disposé au niveau d'une zone d'extrémité (14) de la zone de support (11) opposée à la zone de tête.

7. Véhicule (8) selon l'une quelconque des revendications précédentes, dans lequel l'élément de commande (20) comprend un dispositif de réglage rotatif mécanique (22) et une surface d'entrée sensible au toucher (23).

8. Véhicule (8) selon la revendication 7, dans lequel le dispositif de réglage rotatif mécanique (22) présente un anneau extérieur rotatif (22a) qui entoure la surface d'entrée sensible au toucher (23).

9. Véhicule (8) selon la revendication 8, dans lequel l'anneau extérieur (22a) forme en outre un interrupteur mécanique à touche, à pression ou à bascule, qui est de préférence réalisé sous forme d'interrupteur monostable à touche ou à bascule, qui, après une déviation manuelle dans au moins une direction, revient dans sa position initiale.

10. Véhicule (8) selon l'une quelconque des revendications précédentes, dans lequel l'agencement (1) présente un dispositif de protection contre les surcharges (16) pour protéger l'appui de paume (10) et/ou l'élément de commande (20) contre une contrainte mécanique excessive, le dispositif de protection contre les surcharges étant éventuellement réalisé sous forme de charnière de protection ou d'articulation de protection qui se désengage ou bascule lors d'une surcharge mécanique prédéterminée.

11. Véhicule (8) selon la revendication 10,
a) dans lequel l'élément de commande (20) est un élément de commande pour la commande d'un système d'infodivertissement du véhicule ; et/ou
b) dans lequel, au moyen de l'élément de commande (20), seul un système d'infodivertissement du véhicule (8) est commandable.

12. Véhicule (8) selon l'une quelconque des revendications 10 ou 11, dans lequel l'élément de commande (20) et l'appui de paume (10) sont disposés dans la zone ou à proximité d'un composant de l'habitacle du véhicule, de préférence d'un tableau de bord (5), de telle sorte que l'appui de paume (10) se trouve, dans la deuxième position, plus près du composant de l'habitacle que dans la première position.

13. Véhicule (8) selon l'une quelconque des revendications 10 à 12, dans lequel l'agencement (1), comprenant l'élément de commande (10) et l'appui de paume (20), est disposé entre un tableau de bord (5) et un siège de conducteur (4) du véhicule (8), un espace libre (7) entre l'agencement (1) et le siège de conducteur (4) étant plus grand lorsque l'appui de paume (10) se trouve dans la deuxième position que lorsque l'appui de paume (10) se trouve dans la première position.

14. Véhicule (8) selon l'une quelconque des revendications 10 à 13, le véhicule (8) étant un camion ou un bus.
